Europäisches Patentamt

European Patent Office

Office européen des brevets

(19)

(11) EP 0 531 567 B1

(12) **EUROPÄISCHE PATENTSCHRIFT**

(45) Veröffentlichungstag und Bekanntmachung des Hinweises auf die Patenterteilung:
**20.11.1996 Patentblatt 1996/47**

(51) Int Cl.⁶: **F16H 61/02, B60K 41/06**

(21) Anmeldenummer: **91115372.4**

(22) Anmeldetag: **11.09.1991**

(54) **Steuerung für einen Kraftfahrzeugantrieb mit einem automatischen Getriebe**

Control for automotive power train with an automatic transmission

Commande pour train moteur de véhicule automobile avec une transmission automatique

(84) Benannte Vertragsstaaten:
**DE FR GB**

(43) Veröffentlichungstag der Anmeldung:
**17.03.1993 Patentblatt 1993/11**

(73) Patentinhaber: **SIEMENS AKTIENGESELLSCHAFT**
**80333 München (DE)**

(72) Erfinder: **Stärker, Klaus, Dr.-Ing.**
**W-8402 Neutraubling (DE)**

(56) Entgegenhaltungen:
**DE-A- 2 852 195        DE-A- 3 427 809**
**FR-A- 2 435 635        FR-A- 2 545 567**

**EP 0 531 567 B1**

**Beschreibung**

Die Erfindung betrifft ein Steuergerät nach dem Oberbegriff von Anspruch 1.

Derartige Steuerungen müssen - insbesondere beim Einsatz in modernen elektronischen Getriebesteuerungen - in der Lage sein, beim Festlegen der Schaltpunkte des Getriebes den jeweiligen Belastungszustand des Kraftfahrzeugs zu berücksichtigen. Der Belastungszustand hängt einerseits von der unterschiedlichen Beladung des Kraftfahrzeugs und andererseits von der jeweiligen Fahrbahnneigung ab, d.h. davon, ob eine Steigung, ein Gefälle oder eine ebene Strecke befahren wird. Werden die Schaltpunkte des Getriebes anhand von abgespeicherten Schaltkennlinien festgelegt, so erfolgt das Anpassen an den Belastungszustand durch Verschieben der Schaltkennlinien.

Bei einer bekannten Steuerung erfolgt die Anpassung der Schaltpunkte dadurch, daß eine Soll-Beschleunigung berechnet und mit der jeweiligen Ist-Beschleunigung verglichen und in Abhängigkeit von dem Vergleichsergebnis ein Schaltpunkt aus einer Vielzahl möglicher Schaltpunkte ausgewählt wird (DE 28 52 195 C2). Bei dieser Berechnung müssen eine Reihe von Annahmen getroffen werden, wie z.B. über die in der Regel nicht genau bekannte Fahrzeugmasse.

Eine ebenfalls bekannte Steuerung für einen Kraftfahrzeugantrieb mit einem automatischen Getriebe (FR-A 2 435 635, aus der die im Oberbegriff von Anspruch 1 aufgeführten Merkmale bekannt sind) weist Kennlinienspeicher auf, in denen die Schaltpunkte des Getriebes abgelegt sind. Außerdem weist sie Schaltungsanordnungen auf, mit denen die Fahrzeuggeschwindigkeit ausgewertet und die Schaltpunkte des Getriebes an den Belastungszustand des Kraftfahrzeugs angepaßt werden. Die Auswertung erfolgt, indem durch Differenzieren des die Geschwindigkeit des Kraftfahrzeugs anzeigenden Signals die tatsächliche Beschleunigung des Kraftfahrzeugs ermittelt und mit einer ,,programmierten" Beschleunigung verglichen wird, die als Funktion der jeweiligen Geschwindigkeit und Drosselklappenstellung gespeichert ist. In Abhängigkeit von der Abweichung zwischen der berechneten und der gespeicherten Fahrzeugbeschleunigung werden die Schaltpunkte des Getriebes verändert.

Der Erfindung liegt die Aufgabe zugrunde, eine Steuerung der eingangs genannten Art zu schaffen, die es nur durch Auswerten der Fahrzeuggeschwindigkeit oder der Getriebeabtriebsdrehzahl ermöglicht, unterschiedliche Beladungszustände sowie veränderte Fahrwiderstände und Fahrbahnneigungen zu erkennen. Mit einem aufgrund dieser Auswertung erzeugten Signal werden die Schaltkennlinien oder -punkte angepaßt.

Die Aufgabe wird durch eine Steuerung nach Anspruch 1 gelöst.

Zweckmäßige Weiterbildungen der Erfindung ergeben sich aus den Unteransprüchen.

Die Vorteile der Erfindung liegen insbesondere darin, daß zur Steuerung der Schaltvorgänge nur Betriebsparameter benötigt werden, die in einer elektronischen Getriebesteuerung ohnehin vorhanden sind.

Ausführungsbeispiele der Erfindung werden im folgenden anhand der Zeichnung erläutert. Es zeigen:

Figur 1    ein Blockschaltbild einer Steuerung gemäß der Erfindung,
Figur 2    eine Schaltungsanordnung, die Teil der Steuerung nach Figur 1 ist,
Figur 3    eine weitere Schaltungsanordnung der Steuerung nach Figur 1,
Figur 4    eine andere Ausführung der Schaltungsanordnung nach Figur 3, und
Figur 5    ein anderes Ausführungsbeispiel einer Schaltungsanordnung nach Figur 2.

Ein nur schematisch dargestellter Kraftfahrzeugantrieb 1 besteht im wesentlichen aus einem Motor 2, der von einer Motorsteuerung 3 gesteuert wird. Das von der Kurbelwelle 12 des Motors 2 abgegebene Motordrehmoment oder Motormoment $M_{mot}$ und die durch die Motordrehzahl $n_{mot}$ charakterisierte Drehbewegung gelangen über einen Drehmomentwandler 4 als Turbinenmoment $M_t$ und Turbinendrehzahl $n_t$ zu der Eingangswelle 13 eines automatischen Getriebes 6.

Von der Abtriebswelle 14 des Getriebes 6 wird die Drehbewegung mit der Abtriebsdrehzahl $n_{ab}$ zu einem Differentialantrieb 7 übertragen. Die zugehörige Antriebsachse ist - wie andere von der Erfindung nicht betroffenen Fahrzeugteile - in der Zeichnung nicht dargestellt.

Das automatische Getriebe 6 wird von einer Getriebesteuerung 8 gesteuert, die ihrerseits Befehle des Fahrers über einen Wählhebel 10 und ein Fahrpedal 11 erhält. Die Getriebesteuerung 8 erhält außerdem - wie durch entsprechende Signalleitungen angedeutet - Informationen über das Motormoment $M_{mot}$, die Motordrehzahl $n_{mot}$, die Turbinendrehzahl $n_t$ und die Getriebe-Abtriebsdrehzahl $n_{ab}$. Sie empfängt auch von dem Getriebe 6 Informationen und sendet diesem Steuersignale CS, die die Schaltvorgänge in dem Getriebe steuern.

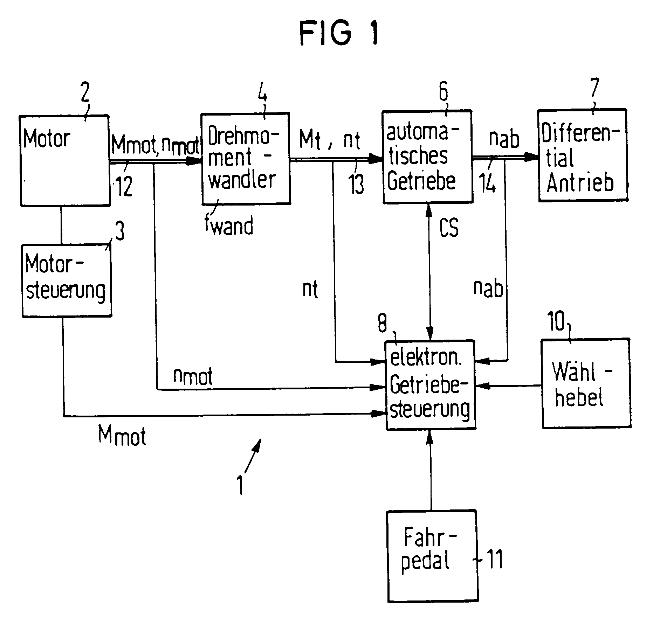

Die Signal- und Steuerleitungen sind in Figur 1 mit einfachen Linien gezeichnet, während die mechanischen Wellen: die Kurbelwelle 12, die Getriebe-Eingangswelle 13 und die Getriebe-Abtriebswelle 14 mit doppeltem Strich gezeichnet sind.

Die Längsbewegung eines Kraftfahrzeugs läßt sich durch folgende Gleichungen beschreiben:

$$\frac{d_{nab}}{dt} = \frac{i_{gang} * M_t - M_w}{2 \pi J} \qquad \text{G1. 1}$$

$$M_t = f_{wand}(M_{mot}, n_{mot}, n_t) \qquad \text{G1. 2}$$

Alle in diesen Gleichungen enthaltenen physikalischen Größen sind auf die Abtriebswelle 14 bezogen. Soweit noch nicht definiert, sind es die Größen:

$i_{gang}$     die Getriebeübersetzung in dem jeweils eingelegten Gang
$M_w$     das Widerstandsmoment des Fahrzeugs
J     das Trägheitsmoment des Fahrzeugs
$f_{wand}$     die Kennlinie des Drehmomentwandlers

Bei den weiter hinten aufgeführten Gleichungen werden noch folgende Größen verwendet:

T     regelmäßig wiederkehrendes Zeitintervall, nach dem Messungen und Rechnungen erneut durchgeführt werden
$k * T$     der jeweils aktuelle Meß- und Rechenzeitpunkt
$(k + 1) * T$     der jeweils nächste Meß- und Rechenzeitpunkt
F     die Abweichung zwischen einer vorhergesagten und einer gemessenen Geschwindigkeit oder Getriebe-Abtriebsdrehzahl
b     ein Faktor, mit dem die Abweichung F multipliziert wird
K     ein Korrekturterm, mit dem die vorhergesagte Geschwindigkeit korrigiert wird
$K_m$     der Anteil von K, der auf die Änderung der Masse des Fahrzeugs beruht und
$K_s$     der Anteil von K, der auf der veränderlichen Fahrbahnneigung beruht.

Wenn alle in den Gleichungen enthaltenen Größen exakt bekannt wären, ließe sich die Getriebe-Abtriebsdrehzahl und damit auch die Geschwindigkeit des Kraftfahrzeugs bei gegebenem Motormoment vorausberechnen. In der Praxis ist aber nur ein Teil der Größen bekannt. In dem Widerstandsmoment $M_w$ sind nur die geschwindigkeitsabhängigen Werte des Luftwiderstands und der Rollwiderstand näherungsweise erfaßt. Insbesondere die Drehmomente, die beim Befahren von Steigungen oder Gefällen auftreten, sind nicht bekannt. Das auf die Getriebe-Abtriebswelle bezogene Trägheitsmoment J des Fahrzeugs ist wegen des veränderlichen Beladungszustands ebenfalls nicht genau bekannt. Dagegen liegen - wie bereits erwähnt - bei heute üblichen elektronischen Getriebesteuerungen Informationen über das Motormoment, die Motordrehzahl, die Turbinendrehzahl und die Getriebe-Abtriebsdrehzahl vor. In der erfindungsgemäßen Steuerung wird ein Ausgangssignal, das von dem Beladungszustand des Fahrzeugs und der Fahrbahnsteigung abhängt, wie folgt erzeugt.

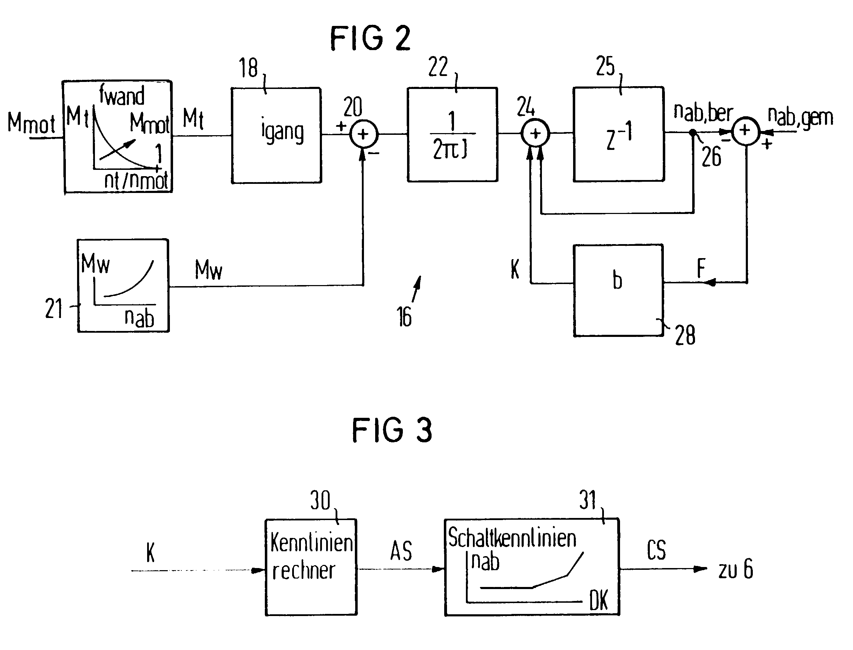

Eine zu der elektronischen Getriebesteuerung 8 gehörende Schaltungsanordnung 16 (Figur 2) weist einen Kennlinienspeicher 17 auf, in dem die Drehmomentwandlerkennlinie $f_{wand}$ abgelegt ist, und zwar in Form von abgespeicherten Zahlenwerten oder in Form einer Rechenvorschrift. Gedanklich stellt die Wandlerkennlinie ein Diagramm dar, in dem das Verhältnis $n_t/n_{mot}$ die Abszisse, das von der Motorsteuerung empfangene Motordrehmoment $M_{mot}$ ein Parameter und das Turbinendrehmoment $M_t$ die Ordinate ist. Von dem Ausgang des Kennlinienspeichers 17 gelangt das Turbinenmoment $M_t$ zu einem Mulitplikator 18, in dem es mit dem Wert $i_{gang}$ der Getriebeübersetzung in dem jeweiligen Gang multipliziert wird. Das Produkt wird dem positiven Eingang eines Addiergliedes 20 übermittelt.

Die Werte des Widerstandsmomentes $M_w$ sind in einem zweiten Kennlinienspeicher 21 in Abhängigkeit von der Geschwindigkeit oder der Getriebe-Abtriebsdrehzahl $n_{ab}$ abgelegt. Das Widerstandsmoment kann aber ebenfalls aus dieser Geschwindigkeit oder Drehzahl berechnet werden. Es wird auf den negativen Eingang des Addiergliedes 20 übertragen, das somit eine Subtraktion durchführt.

Das Ausgangssignal des Addierglieds 20 gelangt zu einem Multiplikator 22, in dem es mit $1/(2 * \pi * J)$ multipliziert und das Ergebnis auf ein Addierglied 24 übertragen wird. Das Ausgangssignal dieses Addierglieds gelangt zu einem Verzögerungsglied 25, und das an dessen Ausgang 26 anliegende, zeitlich verzögerte Signal wird auf das Addierglied 24 und damit auf den Eingang des Verzögerungsglieds 25 zurückgeführt.

Damit wird in der Schaltungsanordnung folgende Differenzengleichung gelöst:

$$n_{ab}\ ((k+1)*T) = n_{ab}(k*T) + \frac{i_{gang}\ *\ M_t\ -\ M_w}{2\ \pi J} \qquad\qquad G1.\ 3$$

Die Gleichung 3 entspricht der Differentialgleichung G1. 1, sie ist aber in dieser Form sowohl in einem Rechner wie auch in einer digitalen Schaltungsanordnung leicht zu lösen. Das Verzögerungsglied 25 tritt hier an die Stelle eines zur Lösung der Gleichung 1 erforderlichen Integrators.

Mit der Differenzengleichung 3 wird zu jedem Zeitpunkt $k*T$ aus den bekannten Größen eine neue "geschätzte" oder "vorhergesagte" Getriebe-Abtriebsdrehzahl für den nächsten Meßzeitpunkt $(k+1)*T$ berechnet. Der berechnete Wert $n_{ab,\ ber}$ wird mit dem zu diesem Zeitpunkt gemessenen Wert $n_{ab,\ gem}$ verglichen, d.h. beide Werte dem negativen bzw. positiven Eingang eines Addierglieds 27 zugeführt. Stimmen die in der Schaltungsanordnung 16 verarbeitenden Größen nicht, da sich die Fahrzeugmasse geändert hat oder weil das Widerstandsmoment wegen des Befahrens einer Steigung oder eines Gefälles nicht den angenommenen Wert aufweist, so wird die vorausberechnete Drehzahl nicht mit der gemessenen Drehzahl (oder Geschwindigkeit) übereinstimmen. Aus der sich ergebenden Abweichung oder Fehler läßt sich auf die veränderten Parameter schließen. Die Abweichung F

$$F = n_{ab,\ gem} - n_{ab'\ ber} \qquad\qquad G1.\ 4$$

wird in einem Multiplikator 28 mit einem vorgegebenen Korrekturfaktor b multipliziert und der dabei entstehende Korrekturterm K

$$K = b * F \qquad\qquad G1.\ 5$$

zu der nächsten vorhergesagten oder berechneten Geschwindigkeit addiert:

$$n_{ab}\ ((k+1)*T) = n_{ab}(k*T) + \frac{i_{gang}\ *\ M_{mot}\ -\ M_w}{2\ \pi J} + K \qquad\qquad G1.\ 6$$

Befährt das Fahrzeug eine Steigung, so wird die vorhergesagte Abtriebsdrehzahl aufgrund der Steigungskräfte größer sein als die gemessene. Damit ergibt sich ein negativer Korrekturterm K. Entsprechend ergibt sich ein positiver Korrekturterm beim Befahren einer Gefällstrecke. Der Betrag des Korrekturterms ist ein Maß für den Steigungswinkel.

Ist andererseits das Fahrzeug stark beladen, so wird die Beschleunigung kleiner als im unbeladenen Zustand - bei gleichem Motordrehmoment - sein. Damit wird sich während der Beschleunigung ebenfalls ein negativer Korrekturterm K ergeben. Bei unbeschleunigter Fahrt in der Ebene ist der Wert des Korrekturterms null.

Der Korrekturterm K wird auf den Eingang eines Kennlinienrechners 30 (Figur 3) gegeben, der ein Ausgangssignal AS erzeugt, das einem Schaltkennlinienspeicher 31 zugeführt wird und in diesem eine Anpassung der Schaltkennlinien an den jeweiligen Belastungszustand bewirkt. So wird z.B. während des Befahrens einer Steigungsstrecke eine Schaltung in den nächst höheren Gang bei größeren Abtriebsdrehzahlen als bei der Fahrt in einer Ebene durchgeführt. Dabei ist eine beliebige Anpassung der Schaltkennlinien den Belastungszustand mit Hilfe des Korrekturterms K durchführbar. Am Ausgang des Schaltkennlinienspeichers 31 wird das Steuersignal CS erzeugt, mit dem die Schaltung in dem Getriebe 6 durchgeführt wird.

Eine vergrößerte Fahrzeugmasse ergibt eine analoge Veränderung der Schaltkennlinien, wobei diese Veränderung nur während der Beschleunigungsphasen notwendig ist. Bei geänderter Fahrzeugmasse und Fahrt auf der Ebene geht nämlich der Korrekturterm K wieder auf null zurück, sobald die Geschwindigkeit konstant ist.

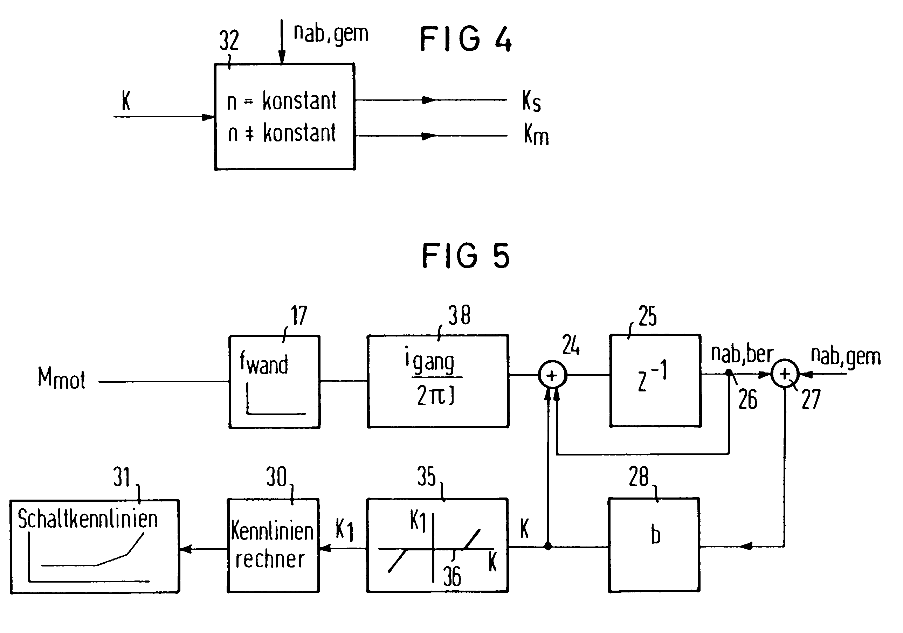

Der Korrekturterm K kann einer Diskriminatorschaltung 32 zugeführt werden (Figur 4), diese ermöglicht eine Unterscheidung zwischen einer erhöhten Zulassung und einer Fahrbahnneigung.

Dazu wird die Drehzahl $n_{ab}$ mehrfach hintereinander gemessen. Ist sie konstant und tritt ein Korrekturterm K auf, so befährt das Fahrzeug zweifellos eine Steigung oder ein Gefälle. In diesem Fall sendet die Diskrimatorschaltung 32 ein Korrekturterm für Steigung $K_s$ aus. Tritt dagegen ein Korrekturterm nur bei veränderlicher Geschwindigkeit, nicht aber bei konstanter Geschwindigkeit auf, so liegt keine Fahrbahnneigung vor. Die Diskriminatorschaltung 32 sendet dann in den Beschleunigungsphasen, d.h. bei nicht konstanter Drehzahl, ein Korrekturterm für Masse $K_m$ aus, der nur durch die veränderte Zuladung des Kraftfahrzeugs bedingt ist. Durch aufeinanderfolgendes Messen und Durchführen einer solchen Unterscheidung werden wechselnde Fahrzustände des Kraftfahrzeugs erfaßt.

Eine andere Ausführung einer Schaltungsanordnung 34 (Figur 5) kann dann verwendet werden, wenn über das

EP 0 531 567 B1

Widerstandsmoment $M_w$ keinerlei Informationen vorliegen. Bei einem solchen Fall wird die Abweichung, die sich bei der Berechnung nach der Gleichung 3 ergibt, größer als bei bekannten Widerstandsmoment sein. Die Schaltungsanordnung 34 weist ein Begrenzerglied 35 auf, das eine Unterscheidung ermöglicht, ob der ermittelte Korrekturterm K auf dem fehlenden Widerstandsmoment oder auf veränderte Lastzustände des Kraftfahrzeugs beruht. Bewegt sich der Korrekturterm innerhalb eines bestimmten Toleranzbandes, wird kein Korrekturterm erzeugt. Dies ist in dem Blockschaltbild des Begrenzergliedes 35 durch einen waagrechten Bereich 36 der Funktion dargestellt. Liegt der Korrekturterm K dagegen außerhalb des Toleranzbandes, so wird ein wirksamer Korrekturterm $K_1$ generiert, der wie vorstehend beschrieben über den Kennlinienrechner 30 ein Verschieben oder Anpassen der Schaltkennlinien in dem Schaltkennlinienspeicher 31 bewirkt. Die Schaltungsanordnung 34 entspricht ansonsten der Schaltungsanordnung 16, wobei allerdings die Multiplikatoren 18 und 22 durch einen Multiplikator 38 ersetzt sind, der die gleiche Funktion ausführt.

Die Änderung der Schaltkennlinien kann auf verschiedene Weise erfolgen. Es können z.B. mehrere Kennliniensätze gespeichert werden, von denen jeweils einer in Abhängigkeit von dem Wert des Korrekturterms K ausgewählt wird. Es kann aber auch nur ein Kennliniensatz gespeichert werden, der dann stetig gemäß einem Algorithmus in Abhängigkeit von dem jeweiligen Wert des Korrekturterms geändert wird.

Wie schon angedeutet, kann anstelle der Getriebe-Abtriebsdrehzahl $n_{ab}$ auch die zu ihrer proportionale Fahrzeuggeschwindigkeit ausgewertet werden. Es müssen dann die Gleichungen auf die entsprechenden Größen umgerechnet werden.

**Patentansprüche**

1. Steuerung für einen Kraftfahrzeugantrieb mit einem automatischen Getriebe, die versehen ist mit:

   - mindestens einem Kennlinienspeicher (31), in dem die Schaltpunkte des Getriebes (6) abgelegt sind, und
   - einer Schaltungsanordnung (16), durch die anhand einer Auswertung der Abtriebsdrehzahl des Getriebes ($n_{ab}$) oder einer mit dieser gleichwertigen Größe ein Ausgangssignal erzeugt wird, durch das die Schaltpunkte an den Belastungszustand des Kraftfahrzeugs angepaßt werden, **dadurch gekennzeichnet,**
   - daß in der Schaltungsanordnung (16) in aufeinander folgenden Zeitintervallen die Differenz (F) zwischen einer für den jeweils nachfolgenden Meßzeitpunkt vorausberechneten Abtriebsdrehzahl und einer gemessenen Abtriebsdrehzahl ermittelt und durch Multiplikation mit einem vorgegebenen Korrekturfaktor (b) ein Korrekturterm (T) gebildet wird, und
   - daß dieser Korrekturterm (T) als Ausgangssignal (AS) dem Kennlinienspeicher (31) zugeführt und mit ihm eine Anpassung der Kennlinien an den Belastungszustand bewirkt wird.

2. Steuerung nach Anspruch 1, dadurch gekennzeichnet, daß sie aufweist:

   - ein Subtraktionsglied (27), in dem die Abweichung (F) zwischen der vorausberechneten und der gemessenen Abtriebsdrehzahl ($n_{ab}$) gebildet wird,
   - einen Multiplizierer (26), in dem aus dieser Differenz und dem Korrekturfaktor (b) ein Korrekturterm (K) gebildet wird, und
   - einen Addierer (24), in dem dieser Korrekturterm zu der jeweils nächsten berechneten Abtriebsdrehzahl addiert wird.

3. Steuerung nach Anspruch 1, dadurch gekennzeichnet, daß sie eine zwei Multiplizierer (18, 22), zwei Addierer (20, 24) und ein Verzögerungsglied (25) enthaltende DifferenzengleichungsAuswerteschaltung (16) aufweist, in der aus in der Getriebesteuerung vorliegenden Parametern ($n_{ab}$, $n_{mot}$, $M_{mot}$, $n_t$) der Wert der vorausberechneten Abtriebsdrehzahl ($n_{ab}$) ermittelt wird.

4. Steuerung nach Anspruch 3, dadurch gekennzeichnet, daß sie aufweist: einen ersten Kennlinienspeicher (17), in dem das Turbinenmoment ($M_t$) in Abhängigkeit von dem Motormoment ($M_{mot}$), der Motordrehzahl ($n_{mot}$) und der Turbinendrehzahl ($n_t$) gespeichert ist, sowie einen zweiten Kennlinienspeicher (21), in dem das Widerstandsmoment $M_w$ des Kraftfahrzeugs in Abhängigkeit von der Abtriebsdrehzahl gespeichert ist, und daß das Turbinenmoment und das Widerstandsmoment zum Vorausberechnen der Abtriebsdrehzahl ($n_{ab}$) verwendet werden.

5. Steuerung nach Anspruch 4, dadurch gekennzeichnet, daß durch die Schaltungsanordnung (16) die Abtriebsdrehzahl ($n_{ab}$) nach folgender Gleichung berechnet wird:

$$n_{ab}*((k+1)*T = n_{ab}(k*T) + \frac{i_{gang}*M_t - M_w}{2\pi J},$$

worin:

$k*T$     der aktuelle Meß- und Rechenzeitpunkt,

$(k+1)*T$     der jeweils nächste Meß- und Rechenzeitpunkt,

$i_{gang}$     die aktuelle Getriebeübersetzung und

$J$     das Trägheitsmoment des Kraftfahrzeugs sind.

## Claims

1. Control for a motor-vehicle drive with an automatic transmission, which is provided with:

   - at least one characteristic curve memory (31), in which the shifting points of the transmission (6) are stored, and
   - a circuit configuration (16) which, on the basis of an evaluation of the output speed of the transmission ($n_{ab}$) or a variable equivalent to the latter, generates an output signal by means of which the shifting points are adapted to the load state of the motor vehicle,

   characterized

   - in that, in successive time intervals, the difference (F) between an output speed precalculated for the next measuring time in each case and a measured output speed is determined in the circuit configuration (16), and a correction term (T) is formed by multiplication with a specified correction factor (b), and
   - in that this correction term (T) is fed to the characteristic curve memory (31) as an output signal (AS) and used to effect an adaptation of the characteristic curves to the load state.

2. Control according to Claim 1, characterized in that it has:

   - a subtraction element (27) in which the deviation (F) between the precalculated and the measured output speed ($n_{ab}$) is formed,
   - a multiplier (26) in which a correction term (K) is formed from this difference and the correction factor (b), and
   - an adder (24), in which this correction term is added to the next calculated output speed in each case.

3. Control according to Claim 1, characterized in that it has a difference equation evaluation circuit (16) which contains two multipliers (18, 22), two adders (20, 24) and a delay element (25) and in which the value of the precalculated output speed ($n_{ab}$) is determined from parameters ($n_{ab}$, $n_{mot}$, $M_{mot}$, $n_t$) present in the transmission control.

4. Control according to Claim 3, characterized in that it has: a first characteristic curve memory (17), in which the turbine torque ($M_t$) is stored as a function of the engine torque ($M_{mot}$), the engine speed ($n_{mot}$) and the turbine speed ($n_t$), and a second characteristic memory (21), in which the resistance torque $M_w$ of the motor vehicle is stored as a function of the output speed, and in that the turbine torque and the resistance torque are used to precalculate the output speed ($n_{ab}$).

5. Control according to Claim 4, characterized in that the output speed ($n_{ab}$) is calculated by the circuit configuration (16) in accordance with the following equation:

$$n_{ab}*((k+1)*T = n_{ab}(k*T) + \frac{i_{gang}*M_t - M_w}{2\pi J},$$

in which:

$k*T$     is the current measuring and calculation instant,

$(k+1)*T$     is the next measuring and calculation instant in each case,

$i_{gang}$     is the current transmission ratio and

J        is the moment of inertia of the motor vehicle.

**Revendications**

1. Commande pour un train moteur de véhicule automobile comportant une transmission automatique, et qui comporte :

   - au moins une mémoire (31) de courbes caractéristiques, dans laquelle sont mémorisés les points de changement de rapport de la transmission, et
   - un montage (16) qui, sur la base d'une exploitation de la vitesse de rotation de sortie de la transmission ($n_{ab}$) ou d'une grandeur équivalente à cette vitesse, produit un signal de sortie, au moyen duquel les points de changement de rapport sont adaptés à l'état de charge du véhicule automobile,

   caractérisée en ce

   - que dans le montage (16), la différence (F) entre une vitesse de rotation de sortie, qui est calculée par avance pour l'instant de mesure respectivement suivant, et une vitesse de rotation de sortie mesurée est déterminée pendant des intervalles de temps successifs, et qu'un terme de correction (T) est formé par multiplication par un facteur de correction prédéterminé, et
   - que ce terme de correction (T) est envoyé, en tant que signal de sortie (AS) à la mémoire (31) de courbes caractéristiques et qu'une adaptation des courbes caractéristiques à l'état de charge est réalisée à l'aide de ce terme de correction.

2. Commande selon la revendication 1, caractérisée en ce qu'elle comporte :

   - un circuit soustracteur (27), dans lequel est formé l'écart (F) entre la vitesse de rotation de sortie préalablement calculée et la vitesse de rotation de sortie mesurée ($n_{ab}$),
   - un multiplicateur (26), dans lequel un terme de correction (K) est formé à partir de cette différence et du facteur de correction (b), et
   - un additionneur (24), dans lequel ce terme de correction est additionné à la vitesse de rotation de sortie immédiatement suivante calculée.

3. Commande selon la revendication 1, caractérisée en ce qu'elle comporte un circuit (16) d'évaluation d'équations différentielles, qui comporte deux multiplicateurs (18,22), deux additionneurs (20,24) et un circuit à retard (25) et dans lequel la valeur de la vitesse de rotation de sortie calculée au préalable ($n_{ab}$) est déterminée à partir de paramètres ($n_{ab}$, $n_m$, $M_{mot}$, $n_t$) intervenant dans la commande de la transmission.

4. Commande selon la revendication 3, caractérisée en ce qu'elle comporte : une première mémoire de courbes caractéristiques (17), dans laquelle le couple ($M_t$) d'une turbine est mémorisé en fonction du couple moteur ($M_{mot}$), de la vitesse de rotation du moteur ($n_{mot}$) et de la vitesse de rotation ($n_t$) de la turbine, ainsi qu'une seconde mémoire de courbes caractéristiques (21), dans laquelle le moment résistant ($M_w$) du véhicule automobile est mémorisé en fonction de la vitesse de rotation de sortie, et que le couple de la turbine et le moment résistant sont utilisés pour le calcul préalable de la vitesse de rotation de sortie ($n_{ab}$).

5. Commande selon la revendication 4, caractérisée en ce que la vitesse de rotation de sortie ($n_{ab}$) est calculée par le montage (16) conformément à la relation suivante:

$$n_{ab}*((k+1)*T n_{ab}(k*T)+ \frac{i_{gang}*M_t, -M_w}{2\pi J},$$

avec :

$k*T$        instant actuel de mesure et de calcul,
$(k+1)*T$      instant de mesure et de calcul respectivement suivant,
$i_{gang}$      rapport actuel de la transmission, et
J        moment d'inertie du véhicule automobile.

# FIG 1

**FIG 2**

$$\frac{1}{2\pi J}$$

$Z^{-1}$

$n_{ab,ber}$

$n_{ab,gem}$

$n_{ab,ber}$

igang

$M_{mot}$  $M_t$  $M_t$

fwand  $M_{mot}$  $M_{mot}$  $\frac{1}{n_t/n_{mot}}$

$M_w$

$M_w$  $n_{ab}$

18  20  22  24  25  26  28  21  16

b

F

K

**FIG 3**

Kennlinien rechner

Schaltkennlinien

$n_{ab}$  DK

K

AS

CS

zu 6

30  31

FIG 4

FIG 5